# EUROPÄISCHE PATENTSCHRIFT

(11) **EP 0 314 082 B1**
(45) Veröffentlichungstag und Bekanntmachung des Hinweises auf die Patenterteilung: **13.01.1993**
(21) Anmeldenummer: 88117784.4
(22) Anmeldetag: 25.10.1988
(51) Int. Cl.: F16C 1/08, A61C 1/14

(54) **Antriebswelle mit einer Kupplungsanordnung**
Motor shaft with a coupling device
Arbre moteur avec un dispositif d'accouplement

(30) Priorität: 26.10.1987 DE 3736196; 26.11.1987 DE 3740172
(43) Veröffentlichungstag der Anmeldung: 03.05.1989
(73) Patentinhaber: Beckmann Versand GmbH, D-82481 Mittenwald (DE)
(72) Erfinder: Gloor, Peter, CH-9053 Teufen (CH)
(74) Vertreter: Gossel, Hans K., Dipl.-Ing.

(56) Entgegenhaltungen:
- DE-A- 1 425 976
- DE-A- 2 317 227
- DE-U- 8 615 180
- FR-B- 2 182 364
- US-A- 2 690 617
- US-A- 4 378 212
- Niemann, G., Maschinenelemente, Berlin, 1981

## Beschreibung

Die Erfindung betrifft eine Antriebswelle nach dem Oberbegriff des Anspruchs 1.

Bei einer aus der FR-B-21 82 364 bekannten Antriebswelle mit Kupplungsanordnung dieser Art für die zahnärztliche Praxis ist das rohrstückförmige Gehäuse, das ein Handstück bildet und in dem das Werkstück drehbar gelagert ist, mit einem hülsenförmigen Kupplungsstück versehen, in das sich ein etwa dornförmiges, am Ende der flexiblen Welle angeordnetes Kupplungsstück einführen läßt, wobei diese aus einer Steckverbindung bestehende Kupplungsanordnung durch einen an dem dornförmigen Teil befestigten federnden Hebel zusammengehalten ist, dessen hakenförmig abgewinkeltes vorderes Ende beim Zusammenfügen der Kupplungsteile in eine auf der Außenseite des hülsenförmigen Kupplungsteils vorgesehene Rastausnehmung halternd einschnappt. Diese bekannte Antriebswelle mit Kupplungsanordnung ist verhältnismäßig aufwendig und bei dieser ist zum Wechsel eines Werkzeugs grundsätzlich jedesmal das das Handstück bildende rohrstückförmige Gehäuse auszutauschen.

Aufgabe der Erfindung ist es, eine Antriebswelle mit Kupplungsanordnung der eingangs angegebenen Art zu schaffen, die bei einfachem Aufbau und einfacher Handhabung der Werkzeuge deren einfache Verbindung mit der Kupplungsanordnung und deren schnellen Wechsel ermöglicht.

Erfindungsgemäß wird diese Aufgabe bei einer Antriebswelle nach dem Oberbegriff des Patentanspruchs 1 durch die kennzeichnenden Merkmale des Patentanspruchs 1 gelöst.

Gem. dieser Lösung ist in dem Kupplungsstück ein Permanent-Magnet gehaltert. Das Kupplungsstück besteht aus zwei hülsenförmigen Teilen, die an ihren Rändern nach Einsatz des stabförmigen Permanent-Magneten miteinander verbunden sind, beispielsweise durch eine Kleb- oder Klemmverbindung. Das Kupplungsstück weist in seiner vorderen Stirnfläche ein zentrales, axial verlaufendes Loch mit vier- oder mehreckigem Querschnitt auf, in das durch eine vordere Öffnung des Gehäuses der zylindrische Werkstückschaft einschiebbar ist, der ein Endteil mit einem dem Querschnitt des Loches entsprechenden Querschnitt und mit einer ebenen Stirnfläche aufweist, die im gekuppelten Zustand stumpf an einer ebenen Polfläche des Magneten anliegt, die den Boden des Loches bildet. Dabei ist der Mündungsbereich des Loches des Kupplungsstücks trichterartig zu seinem Öffnungsrand hin erweitert.

In der erfindungsgemäßen Vorrichtung ist die Kupplungsanordnung in einem gut zu handhabenden rohrstückförmigen Gehäuse angeordnet, das sich von dem Benutzer feinfühlig wie ein Schreibstift bewegen läßt, weil die in einem flexiblen Schlauch gehalterte und geführte flexible Antriebswelle zu keiner ins Gewicht fallenden Beeinträchtigung der Bewegungsfreiheit führt. Die unterschiedlichen Werkzeugköpfe lassen sich einfach und schnell durch Aufstecken mit der Kupplungsanordnung verbinden. Der Magnet hält die Werkzeugschäfte sicher in ihrem gekuppelten Zustand, da die Werkzeugköpfe bei den Bearbeitungsvorgängen nur mit einem axial nach innen oder radial wirkenden Druck beaufschlagt werden. Die Werkzeugschäfte sind in dem axialen Loch des den Haltemagneten aufnehmenden Kupplungsstücks axial verschieblich, aber undrehbar gehalten. Das Loch kann selbstverständlich auch einen anderen als einen mehreckigen Querschnitt aufweisen, wenn dieser formschlüssig eine Drehung des eingesetzten Schaftes verhindert. Beispielsweise kann das Loch mit axial verlaufenden Nuten und der Schaft entsprechend mit axialen Keilen versehen sein. Zur drehfesten Halterung genügt bereits auch eine sehnenartige Abflachung eines runden Querschnitts. Da der Mündungsbereich des Loches trichterartig zu seinem Öffnungsrand hin erweitert ist, ist eine sichere Kupplung der Werkzeugschäfte auch dann sichergestellt, wenn diese mit ihren endseitigen Paßteilen nicht fluchtend in das entsprechend profilierte Loch des Kupplungsstückes eingesetzt werden. Denn der Magnet zieht den nicht passend eingesetzten Werkstückschaft richtig fluchtend in das Loch hinein, sobald der Antriebsmotor eingeschaltet wird und die Welle Drehungen ausführt. Das vordere Rohrstück des Gehäuseteils bildet in einfacher Weise eine Lager- und Führungsbuchse für den Werkzeugschaft. Diese Buchse besteht vorzugsweise aus Kunststoff. Sie kann auch aus einem Lagermetall mit guten Gleiteigenschaften gegenüber dem stählernen Werkzeugschaft bestehen. Das rohrförmige Gehäuse besteht zweckmäßigerweise ebenfalls aus Kunststoff.

Die erfindungsgemäße Vorrichtung eignet sich insbesondere für Werkzeuge, die im Bereich der Schönheits- und Gesundheitspflege zum Beschleifen und Befeilen von Finger- und Zehennägeln, von Hornhaut und Schwielen, von Hühneraugen und anderen durch Hautverdickungen und/oder -verhärtungen entstandenen Veränderungen Verwendung finden. Sie kann aber auch zur feinfühligen Bearbeitung von kleinen Werkstücken auf anderen Gebieten eingesetzt werden.

Magnetkupplungen, die einen Teil der erfindungsgemäßen Kombination bilden, sind an sich bei bohrmaschinenähnlichen Vorrichtungen zum Ankuppeln von Schraubendrehern o.dgl. bekannt. Beispielsweise zeigt die DE-A-32 00 462 eine Vorsatzkupplung für eine elektrische Handbohrmaschine mit einer Einrichtung zur Drehmomentbegrenzung, in die der sechskantige Schaft eines Kreuzschraubenziehers in einem zu dem Schaft komplementären Aufnahmeloch durch einen Permanentmagneten gehalten ist. Bei dieser bekannten Vorrichtung dreht sich jedoch die Kupplungsanordnung zusammen mit dem Bohrfutter, so daß eine Handhabung des Gerätes nur über das den Motor und ein Getriebe aufnehmende Gehäuse erfolgen kann. Bekannte Vorrichtungen dieser Art drehen nur mit einer verhältnismäßig geringen Drehzahl und die Schäfte der Werkzeuge weisen einen verhältnismäßig großen Querschnitt auf, so daß die auf diese von den Haltemagneten ausgeübte Kraft verhältnismäßig groß ist. Hingegen läßt sich die erfindungsgemäße Vorrichtung für die erfindungsgemäße Verwendung mit Drehzahlen im Bereich von 3.000 bis 10.000 U/min und vorzugsweise mit 5.000 bis 6.000 U/min betreiben.

Aus US-A-4378212 ist ein einen Elektromotor aufnehmendes zylinderförmiges Gehäuse bekannt, an das ein Halter für ein rotationssymmetrisches Werkzeug ankuppelbar ist. Der Halter ist mit einer drehbar gelagerten Welle versehen, die über eine Klauenkupplung mit der Motorwelle kuppelbar ist. Die Welle ist mit einem verbreiterten, eine Sacklochbohrung aufweisenden vorderen Ende versehen, in dessen Grund ein Permanent-Magnet durch eine eingeschobene Buchse gehaltert ist, die einen in etwa rechteckigen Durchtrittsspalt für das mit einer Nut versehene hintere Ende des Werkzeugschaft versehen ist. Der Werkzeugschaft wird durch den Permanent-Magnet in der Buchse gehalten, wobei von der Buchse dadurch ein Drehmoment auf den Schaft übertragen werden kann, daß dieser im Bereich des Schafts mit der rechteckigen Ausnehmung der Buchse verkantet.

Nach einer vorteilhaften Ausgestaltung ist vorgesehen, daß der vollflächig auf der Polfläche abgestützte Teil der Stirnfläche des Werkzeugschafts etwa 2-10 mm² beträgt. Überraschend ist es bei der erfindungsgemäßen Vorrichtung möglich, eine sichere Halterung der Werkzeugköpfe auch dann zu gewährleisten, wenn deren Schäfte nur einen geringen Durchmesser aufweisen. Die erfindungsgemäße Vorrichtung ermöglicht es daher, kleine hochdrehende Werkzeugköpfe sicher in der Kupplungsanordnung bei schneller Auswechslungsmöglichkeit zu haltern.

Das Kupplungsstück kann durch ein Kunststoffgleitlager oder Nadellager in dem Gehäuse gelagert sein.

Die den Werkzeugschaft aufnehmende Buchse ist zweckmäßigerweise mit einem Flansch oder Bund versehen, die oder der sich auf einer Ringschulter der Gehäusebohrung abstützt und gegen diese durch eine Überwurfmutter oder ein eingeschraubtes deckelartiges Halteteil mit einem eingezogenen ringförmigen, eine Stufe bildenden Rand gehalten ist.

Die flexible Antriebswelle besteht zweckmäßigerweise aus einem flexiblen Draht mit mehreren diesen konzentrisch einfassenden Lagen aus um diesen gewickelten Draht. Dabei ist jede der Lagen zweckmäßigerweise aus 4-12 wendelförmig gewickelten Drähten gebildet. Derartige biegsame Wellen sind als Tachometerwellen, Kraftübertragungs- bzw. Hochleistungswellen und Fernsteuerungswellen bekannt und werden beispielsweise von der Firma Suhner vertrieben.

Ein Ausführungsbeispiel der Erfindung wird nachstehend anhand der Zeichnung näher erläutert.

In dieser zeigt
- Fig.1: einen Längsschnitt durch die Antriebswelle mit Kupplungsanordnung und
- Fig.2: den hinteren an einen Getriebemotor angeschlossenen Teil der Antriebswelle.

Die aus einem flexiblen Stahldraht oder einem Stahldraht mit mehreren wendelförmig um diesen gewickelten Lagen bestehende Antriebswelle 1 ist in einem Schlauch 2 gehaltert und geführt, der aus Kunststoff oder einem gewendelten Stahldraht besteht, dessen Windungen 3 dicht an dicht liegen. Die schlauchförmige Stahldrahtwendel 2 ist mit einer Ummantelung 4 aus Kunststoff versehen. Das vordere Ende der schlauchförmigen Stahldrahtwendel ist in dem hinteren Endbereich 5 eines rohrabschnittförmigen Gehäuses 6 aus Kunststoff befestigt. In dem Gehäuse 6 ist ein zylindrisches Kupplungsstück 7 über Kunststoffgleitlager oder Nadellager 8,9 drehbar gelagert. Das zylindrische Kupplungsstück 7 besteht aus zwei hülsenförmigen Teilen 10,11, die einen Stabmagneten 12 kapseln und an ihren einander zugewandten Rändern 13,14 miteinander verklebt oder beispielsweise eine zahnförmige Ausbildung der Ränder miteinander verklemmt sind.

In einer zentralen Bohrung des hinteren hülsenförmigen Teils 10 ist das vordere Ende 16 der flexiblen Welle undrehbar befestigt.

Der vordere Boden des hülsenförmigen Teils 11 ist mit einem zentralen Loch 17 mit quadratischem Querschnitt versehen. Dieses Loch ist zu seinem äußeren Ende hin durch entsprechende Schrägflächen 18 trichterförmig erweitert.

Im Anschluß an das zylindrische Kupplungsstück 7 ist in dem Gehäuse 6 eine Buchse 19 aus Kunststoff gehaltert, die in ihrem äußeren Endbereich mit einem ringförmigen Flansch 20 versehen ist. Dieser ringförmige Flansch 20 stützt sich auf einer Ringschulter 21 der Bohrung des Gehäuses 6 ab. Der äußere Teil der Gehäusebohrung ist mit einem Innengewinde versehen, in das ein deckelartiges Endstück 22 eingeschraubt ist, das den Ringflansch 20 zwischen sich und der Ringschulter 21 des Gehäuses festlegt. In der Buchse 19 ist der Schaft 24 eines Werkzeugs geführt und gehaltert, der einen beispielsweise fräsenden, polierenden oder schleifenden Werkzeugkopf 25 trägt. Das innere Ende des kreisrunden stählernen Schaftes ist in Form eines Vierkants 26 ausgebildet, dessen Abmessungen dem Querschnitt des Loches 17 in der Weise angepaßt ist, daß dieser undrehbar aber axial verschieblich in diesem gehalten ist. Der Schaft 24 weist eine ebene Stirnfläche 28 auf, mit der er plan auf der ebenen Polfläche 29 des Magneten 12 aufliegt.

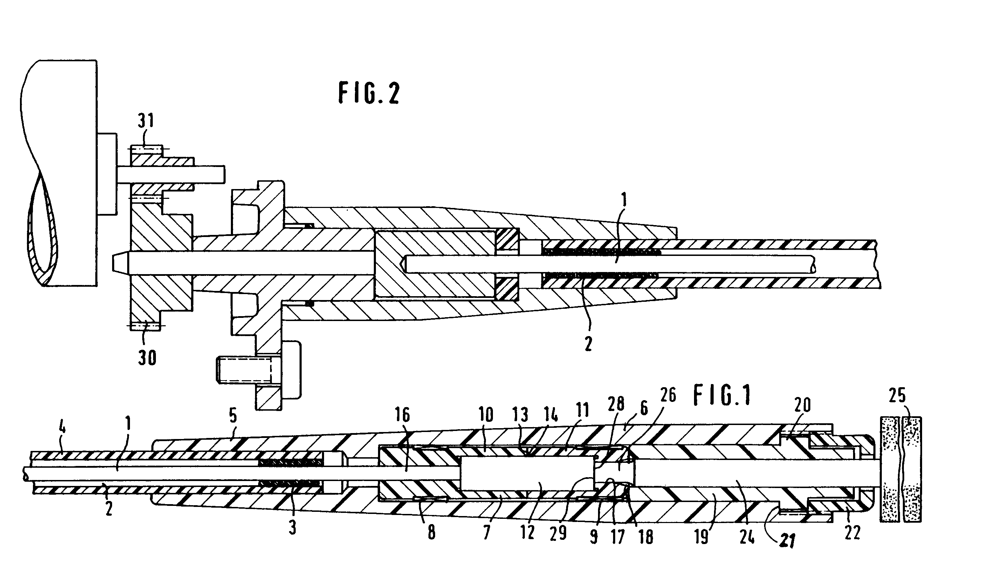

Wie aus Fig.2 ersichtlich ist, ist auf das motorseitige Ende der flexiblen Welle 1 ein Zahnrad 30 befestigt, das mit einem Antriebsritzel 31 des Motors kämmt.

## Patentansprüche

1. Antriebswelle (1), die mit einem Motor oder Getriebemotor in Antriebsverbindung steht und aus einem flexiblem Stahldraht mit kreisrundem Querschnitt oder aus einem flexiblen Draht mit mehreren, diesen konzentrisch einfassenden Lagen aus um diesen gewickelten Draht, die in einem Schlauch (2) aus Kunststoff oder gewändeltem Stahldraht mit im wesentlichen dicht an dicht liegenden Windungen geführt ist, besteht,
mit einer Kupplungsanordnung zur Aufnahme von mit einem Schaft (24) versehenen rotationssymmetrischen Werkzeugen, beispielsweise fräsenden, polierenden oder schleifenden Werkzeugköpfen (25),
mit einem mit dem gewendelten Schlauch (2) auf der dem Motor gegenüberliegenden Seite verbundenem rohrstückförmigen Gehäuse (6), in dem ein zylindrisches Kupplungsstück (7) zum axialen Festhalten des Werkzeugschafts (24) drehbar gelagert ist,
**dadurch gekennzeichnet,**
daß in dem Kupplungsstück (7) ein Permanentmagnet (12) gehaltert ist,
daß das Kupplungsstück (7) aus zwei hülsenförmigen Teilen (10,11) besteht, die an ihren Rändern nach Einsatz des stabförmigen Permanentmagneten (12) miteinander verbunden sind, beispielsweise durch Kleb- oder Klemmverbindung,
daß das Kupplungsstück (7) in seiner vorderen Stirnfläche ein zentrales axial verlaufendes Loch (17) mit vier- oder mehreckigem Querschnitt aufweist, in das durch eine vordere Öffnung des Gehäuses der zylindrische Werkzeugschaft (24) einschiebar ist, der einen Endteil mit einem dem Querschnitt des Loches entsprechenden Querschnitt und mit einer ebenen Stirnfläche (28) aufweist, die im gekuppelten Zustand stumpf an einer ebenen Polfläche (29) des Magneten (12) anliegt, die den Boden des Loches bildet, und
daß der Mündungsbereich des Loches des Kupplungsstückes (7) trichterartig zu seinem Öffnungsrand hin erweitert ist.

2. Antriebswelle nach Anspruch 1, dadurch gekennzeichnet, daß der vollflächig auf der Polfläche (29) abgestützte Teil der Stirnfläche (28) des Werkzeugschaftes (24) etwa 2-10 mm² beträgt.

3. Antriebswelle nach Anspruch 1 oder 2, dadurch gekennzeichnet, daß der gewendelte Schlauch (2) mit einem eine Ummantelung bildenden Überzug (4) aus Kunststoff versehen ist.

4. Antriebswelle nach einem der Ansprüche 1 bis 3, dadurch gekennzeichnet, daß das Kupplungsstück (7) durch Kunststoffgleitlager oder Nadellager (8,9) in dem GEhäuse (6) gelagert ist.

5. Antriebswelle nach einem der Ansprüche 1 bis 4, gekennzeichnet durch eine Lager- und Führungsbuchse (19) für den Werkzeugschaft, die mit einem Flansch oder Bund (20) versehen ist, der sich auf einer Ringschulter (21) der Gehäusebohrung abstützt und gegen diese durch eine Überwurfmutter oder ein eingeschraubtes deckelartiges Halteteil (22) mit einem eingezogenen ringförmigen, eine Stufe bildenden Rand gehalten ist.

## Claims

1. Drive shaft (1) drivingly connected to a motor or geared motor and consisting of a flexible steel wire of circular cross-section, or of a flexible wire with a plurality of layers of wire wound around it and concentrically surrounding it, said shaft being disposed in a flexible tube (2) of plastics material or of steel wire coiled in substantially contiguous turns; with a coupling arrangement for mounting rotationally symmetrical tools provided with a shank (24), for example milling, polishing or grinding tool heads (25); with a casing (6) which is in the form of a length of tubing and is joined to the coiled flexible tube (2) at the end remote from the motor and in which a cylindrical coupling member (7) for axially securing the tool shank (24) is rotatably mounted; characterised in that in the coupling member (7) a permanent magnet (12) is fastened; in that the coupling member (7) consists of two sleeve-like parts (10, 11) which after the insertion of the bar-shaped permanent magnet (12) are joined together at their edges, for example by an adhesive or clamp connection; in that the coupling member (7) has in its front end face a central, axially extending hole (17) which has a quadrangular or polygonal cross-section and into which the cylindrical tool shank (24) can be inserted by way of a front opening in the casing, said shank having an end part whose cross-section corresponds to that of the hole and which has a flat end face (28) which in the coupled state abuts against a flat pole face (29) of the magnet (12), said pole face forming the bottom of the hole; and in that the mouth region of the hole in the coupling member (7) widens in funnel shape towards its opening edge.

2. Drive shaft according to Claim 1, characterised in that that part of the end face (28) of the tool shank (24) which is supported over its entire area on the pole face (29) amounts to about 2-10 mm².

3. Drive shaft according to Claim 1 or 2, characterised in that the coiled flexible tube (2) is provided with a plastics covering (4) forming a sheath.

4. Drive shaft according to one of Claims 1 to 3, characterised in that the coupling member (7) is mounted in the casing (6) by means of plastics sliding bearings or needle bearings (8, 9).

5. Drive shaft according to one of Claims 1 to 4, characterised by a bearing and guide bush (19) for the tool shank, which bush is provided with a flange or collar (20) which is supported on an annular shoulder (21) in the casing bore and is held against the latter by a cap nut or screwed-in cover-like retaining member (22) provided with an indented annular rim forming a step.

## Revendications

1. Arbre moteur (1) qui est en liaison d'entraînement avec un moteur ou un moteur d'engrenage et qui comprend un fil d'acier flexible d'une section transversale ronde ou un fil flexible comprenant plusieurs couches entourant celui-ci concentriquement en fil enroulé autour de celui-ci, qui est guidé dans un tuyau (2) en matière artificielle ou en fil d'acier tournant ou rendu hélicoïdal avec des spires essentiellement proches les unes des autres,
avec un dispositif d'accouplement pour la réception d'outils symétriques en rotation pourvus d'une tige (24), par exemple des têtes d'outil (25) destinées au fraisage, au polissage ou à la rectification,
avec un boîtier (6) en forme de tronçon de tube relié au tuyau (2) rendu hélicoïdal sur le côté opposé au moteur, dans lequel une pièce d'accouplement cylindrique (7) est montée tournante pour le maintien axial de la tige d'outils (24), caractérisé
en ce qu'un aimant permanent (12) est fixé dans la pièce d'accouplement (7), en ce que la pièce d'accouplement (7) est constituée de deux pièces en forme de manchon (10, 11) qui sont reliées l'une à l'autre à leurs bords après la mise en place de l'aimant permanent en forme de barre (12), par exemple par assemblage collé ou par serrage,
en ce que la pièce d'accouplement (7) présente dans sa surface frontale avant un trou central s'étendant axialement (17) d'une section transversale carrée ou polygonale dans lequel on peut pousser à travers une ouverture avant du boîtier la tige d'outil cylindrique (24) qui présente une pièce extrême d'une section transversale correspondant à la section transversale du trou et une surface frontale plane (28) qui, dans l'état accouplé, vient bout à bout à une surface de pôle plane (29) de l'aimant (12), qui constitue le fond du trou et
en ce que la zone d'embouchure du trou de la pièce d'accouplement (7) est élargie en direction de son bord d'ouverture en forme d'entonnoir.

2. Arbre moteur selon la revendication 1, caractérisé en ce que la pièce de la surface frontale (28) de la tige d'outil (24) prenant appui par toute sa surface sur la surface de pôle (29) est environ de 2-10 mm².

3. Arbre moteur selon la revendication 1 ou 2, caractérisé en ce que le tuyau rendu hélicoïdal (2) est pourvu d'un revêtement (4) en matière artificielle constituant une gaine.

4. Arbre moteur selon l'une des revendications 1 à 3, caractérisé en ce que la pièce d'accouplement (7) est logée dans le boîtier (6) par des paliers à glissement ou des roulements à aiguilles (8, 9) en matière artificielle.

5. Arbre moteur selon l'une des revendications 1 à 4, caractérisé par un manchon de palier et de guidage (19) pour la tige d'outil qui est pourvue d'un rebord ou collet (20) qui prend appui sur un épaulement annulaire (21) du perçage de boîtier et qui est maintenue contre celui-ci par un écrou d'accouplement ou une pièce de maintien (22) vissée en forme de couvercle possédant un bord rentré, annulaire, constituant un gradin.
